# EUROPÄISCHE PATENTSCHRIFT

(11) **EP 1 784 670 B1**
(45) Veröffentlichungstag und Bekanntmachung des Hinweises auf die Patenterteilung: **17.02.2010**
(21) Anmeldenummer: 05801690.8
(22) Anmeldetag: 05.08.2005
(51) Int. Cl.: G02B 6/122

(54) **VERFAHREN ZUR HERSTELLUNG VON PHOTONISCHEN KRISTALLEN**
METHOD FOR PRODUCING PHOTONIC CRYSTALS
PROCEDE POUR PRODUIRE DES CRISTAUX PHOTONIQUES

(30) Priorität: 05.08.2004 DE 102004037949
(43) Veröffentlichungstag der Anmeldung: 16.05.2007
(73) Patentinhaber: Karlsruher Institut für Technologie, 76131 Karlsruhe (DE); UNIVERSITY OF TORONTO, Toronto, Ontario M5S 1A1 (CA)
(72) Erfinder: WONG, Sean H., Toronto, Ontario M2H2T7 (CA); VON FREYMANN, Georg Ludwig Eberhard, Toronto, Ontario M2J2B4 (CA); OZIN, Geoffrey A., Toronto, Ontario M4V1Y9 (CA); DEUBEL, Markus, 76889 Schweighofen (DE); WEGENER, Martin, 76127 Karlsruhe (DE)
(74) Vertreter: Fitzner, Uwe
(86) Internationale Anmeldenummer: PCT/EP2005/054231
(87) Internationale Veröffentlichungsnummer: WO 2006/015989

(56) Entgegenhaltungen:
- WO-A-2005/062091
- WO-A-2005/066672
- US-A- 4 493 886
- CHENG Y ET AL: "3D microstructuring inside Forturan glass by femtosecond laser" RIKEN REVIEW, INSTITUTE OF PHYSICAL AND CHEMICAL RESEARCH, WAKO,, JP, Nr. 50, Januar 2003 (2003-01), Seiten 101-106, XP002972175 ISSN: 0919-3405
- C. MENEGHINI, A. VILLENEUVE: "As2S3 photosensitivity by two-photon absorption: holographic gratings and self-written channel waveguides" JOURNAL OF THE OPTICAL SOCIETY OF AMERICA B, Bd. 15, Nr. 12, Dezember 1998 (1998-12), Seiten 2946-2950, XP002361412 in der Anmeldung erwähnt
- M. DEUBEL, G. V. FREYMANN, M. WEGENER, S. PEREIRA, K. BUSCH, C.M. SOUKOULIS: "Direct laser writing of three-dimensional photonic-crystal templates for telecommunications" NATURE MATERIALS, Bd. 3, 13. Juni 2004 (2004-06-13), Seiten 444-447, XP002361413
- Y. CHENG, K. SUGIOKA, M. MASUDA, K. SHIHOYAMA, K. TOYODA, K. MIDORIKAWA: "Optical gratings embedded in photosensitive glass by photochemical reaction using a femtosecond laser" OPTICS EXPRESS, Bd. 11, Nr. 15, 28. Juli 2003 (2003-07-28), Seite 1809-1816, XP002361414
- A. FEIGEL, M. VEIGNER, B. SFEZ, A. ARSH, M. KLEBANOV, L. LYUBIN: "Three-dimensional simple cubic woodpile photonic crystals made from chalcogenide glasses" APPLIED PHYSICS LETTERS, Bd. 83, Nr. 22, 1. Dezember 2003 (2003-12-01), Seiten 4480-4482, XP002361415 in der Anmeldung erwähnt
- A. ZOUBIR, M. RICHARDSON, C. RIVERO, A. SCHULTE, C. LOPEZ, K. RICHARDSON, N. HÔ, R. VALÉE: "Direct femtosecond laser writing of waveguides in As2S3 thin films" OPTICS LETTERS, Bd. 29, Nr. 7, 1. April 2004 (2004-04-01), Seiten 748-750, XP002361416 in der Anmeldung erwähnt
- S. KAWATA, H-B. SUN, T. TANAKA, K. TAKADA: "Finer features for functional microdevices" NATURE, Bd. 412, 16. August 2001 (2001-08-16), Seiten 697-698, XP002361417 in der Anmeldung erwähnt

## Beschreibung

Diese Anmeldung nimmt die Priorität der DE 10 2004 037 949.1 in Anspruch.

Die Erfindung betrifft ein Verfahren zur Herstellung von Photonischen Kristallen.

E. Yablonovitch, Phys. Rev. Lett., Band 58, Seite 2059-2062, 1987, und S. John, ebd., Seite 2486-2489, 1987, leiteten unabhängig voneinander die Bedingungen her, die ein dreidimensionaler Photonischer Kristall erfüllen muss, um eine vollständige photonische Bandlücke aufzuweisen. Seither wird versucht, aus einem geeigneten Material entweder top-down durch Mikrostrukturierung, bottom-up durch Selbstorganisation oder
durch Kombination beider Verfahren dreidimensionale photonische Kristalle tatsächlich herzustellen. Allerdings müssen die Gitterkonstanten solcher Kristalle vergleichbar mit der Wellenlänge des Lichts sein und aus einem Material mit hohem Brechungsindex, d.h. oberhalb von ca. n = 2, bestehen.

Eine bekannte photonische Gitterstruktur mit einer dreidimensionalen photonischen Bandlücke aus einem Material mit hohem Brechungsindex ist der so genannte woodpile (Holzstapel) oder Lincoln-log Aufbau. Ein Verfahren zur Herstellung einer derartigen Struktur besteht in der Stapelung einer Reihe dielektrischer Stäbe auf einer anderen Reihe dielektrischer Stäbe, wobei jede Reihe senkrecht zur vorhergehenden Reihe angeordnet und gleichzeitig um eine halbe Periode verschoben ist.

Durch schichtweise Prozessierung eines Silizium-Halbleiters stellten J.G. Fleming und S.Y. Lin, Three-dimensional photonic crystal with a stop band from 1.35 to 1.95 µm, Optics Letters, Band 24, Seite 49-51, 1999, den ersten woodpile mit vollständiger photonischer Bandlücke für das nahe Infrarot bereit. Ebenso stellten B. Sfez und V. Lyubin, Three-dimensional simple cubic woodpile photonic crystals made from chalcogenide glasses, Appl. Phys. Lett., Band 83, Seite 4480-4482, 2003, dieselbe Struktur mittels schichtweise holographischer Strukturierung und Ätzung eines Chalcogenid-Halbleiters her.

Um eine schichtweise Herstellung zu vermeiden, entwickelten S. Kawata, H.B. Sun, T. Tanaka und K. Takeda, Finer features for functional microdevices, Nature, Band 412, Seite 697, 2001, das direkte Laserschreiben von woodpile Strukturen in polymeren Photoresists. Sie polymerisierten ausgewählte Bereiche des Photoresists, die im Brennpunkt des Laserstrahls lagen. Der Brennpunkt wurde in allen drei Raumrichtungen gescannt, um die Gitterstrukturen des gewünschten Photonischen Kristalls zu schreiben. Aufgrund des niedrigen dielektrischen Kontrasts der polymeren Resists ist es nicht möglich, damit Strukturen mit vollständiger dreidimensionaler Bandlücke direkt herzustellen.

C. Meneghini und A. Villeneuve, schlugen in As2S3 photosensi tivity by two-photon absorption: Holographic gratings and self written channel waveguides, Journal of the Optical Society of America B, Band 15, Seite 2946-2950, 1998, vor, im Inneren eines getemperten Chalogenid-Resists mittels laserinduzierter Brechungsindexmodulation einen kontinuierlichen zweidimensionalen Wellenleiter herzustellten. Brechungsindexmodulation tritt über photoinduzierte strukturelle Änderungen auf, die durch Zwei-Photonen-Prozesse hervorgerufen werden, die an der Oberfläche des Chalogenid-Resists beginnen. Experimentell wurde gezeigt, dass Laserpulse, die durch eine optische Faser in den Chalogenid-Resist eingeführt wurden, den Brechungsindex in den belichteten Bereichen verändern. Mittels selbstfokussierender Effekte wurde so ein Wellenleiter in den Chalogenid-Resist geschrieben. Dieses Verfahren ist jedoch auf lineare zweidimensionale Strukturen beschränkt, die parallel zur optischen Faserache in den Chalcogenid-Resist geschrieben werden.

K. Richardson et.al., Direct femtosecond laser writing of waveguides in As2S3 thin films, Optics Letters, Band 29, Seite 748-750, April 2004, zeigten die Herstellung zweidimensionaler Y-Koppler in einem Chalcogenid-Film mittels direktem Laserschreiben mit einer Femtosekundenlaserquelle. Angeregt durch den Laserpuls, erfuhr das Chalcogenid eine photoinduzierte strukturelle Veränderung, die eine Zunahme des Brechungsindex in den beschriebenen Bereichen bewirkte. Die so hergestellte funktionale zweidimensionale Struktur wurde jedoch nicht herausgeätzt, sondern wirkte lediglich aufgrund des Brechungsindexunterschieds zwischen beschriebenen und unbeschriebenen Bereichen innerhalb des Chalcogeniodglases.

A.P. Aleksandrov et al., Formation of microstructures in As2S3 by a femtosecond laser pulse train, Quantum Electronics, Band 31, Seite 398-400, 2001, schlugen die Verwendung eines Zwei-Photonen-Prozesses Systems für einen photothermisch induzierten Phasenübergang in einem Chalcogenid vor. Falls das Chalcogenid intensive Laserpulse absorbiert, tritt eine Änderung des Brechungsindex auf, der von einer thermisch induzierten Spannungsdoppelbrechung hervorgerufen wird, wobei Brechungsindexstrukturen in der Größenordnung von Mikrometern gebildet werden. Die erhaltene Struktur im Chalcogenid wurde nicht herausgeätzt.

Nach C. Meneghini et al. (s.o.) ist ein Chalcogenid von einer reversiblen oder irreversiblen photoinduzierten strukturellen Phasenänderung betroffen, wobei sich eine reversible Phasenänderung über eine anschließende Behandlung des Chalcogenids rückgängig machen lässt. Zum Beispiel lassen sich in einem getemperten Chalcogenid-Glass eingebrachte Strukturen durch thermische Behandlung löschen, die die in das Material geschriebenen ungeordneten Strukturen relaxiert.

Für das irreversible Verfahren wird die gewünschte Phase des Chalcogenid-Photoresists mittels thermischer Verdampfung gebildet. Wird z. B. ein As₂S₃-Chalcogenid-Glas als Vorläufersubstanz eingesetzt, bewirkt thermische Verdampfung die Bildung von As₄S₄-Molekülen in der Gasphase, die sich anschließend auf das Substrat niederschlagen. Unter Belichtung mit geeigneter Strahlung ordnen sich die Bindungen in den As₄S₄-Molekülen neu, um wieder As₂S₃-Chaicogenid zu bilden. Dieses photonengesteuerte Verfahren ist irreversibel, da das As₂S₃-Chalcogenid nicht wieder in molekulare As₄S₄-Moleküle zurückgeführt werden kann, ohne zuvor die Struktur zu zerstören. So hergestellte irreversible dünne Chalcogenid-Filme zeigen jedoch Eigenschaften, die sich von direkt beschriebenem As₂S₃-Chalcogenid unterscheiden, insbesondere eine Blauverschiebung der Bandlücke des verdampften im Vergleich zum ursprünglichen Material sowie unterschiedliche Kristallstrukturen und chemische Aktivitäten.

Ferner wird in Y. Cheng et al., 3D microstructuring inside Forturan glass by femtosecond laser, RIKEN Review No. 50, Januar 2003 ein Verfahren zur 3D-Mikrostrukturierung mittels Laserstrahlung vorgeschlagen.

Ausgehend hiervon ist es die Aufgabe der vorliegenden Erfindung, ein Verfahren zur Herstellung Photonischer Kristalle vorzuschlagen, das die genannten Nachteile und Einschränkungen nicht aufweist. Insbesondere soll dieses Verfahren die Herstellung dreidimensionaler Photonischer Kristalle in einem anorganischen Photoresist ermöglichen.

Diese Aufgabe wird durch die Merkmale des Anspruchs 1 gelöst. Die Unteransprüche beschreiben jeweils vorteilhafte Ausgestaltungen der Erfindung.

Die vorliegende Erfindung beschreibt ein Verfahren zum direkten Laserschreiben einer Vielzahl von Strukturen verschiedener Größe und räumlicher Dimensionalität in einem anorganischen Material, das als anorganischer Photoresist bezeichnet wird, wobei die Strukturen über eine geregelte Bewegung des Brennpunkts eines fokussierten Laserstrahls auf dessen Weg im anorganischen Material erzeugt werden. Die Erfindung basiert auf einer photoneninduzierten Änderung der Phase im Brennpunkt des Laserstrahls, ohne das übrige Material zu beeinflussen, und die anschließend einem in Bezug auf die Phase selektiven Ätzprozess unterworfen werden, um so die gebildeten Strukturen im anorganischen Material zu offenbaren.

Das erfindungsgemäße Verfahren besteht insbesondere in der Herstellung von dreidimensionalen Strukturen, vorzugsweise von dreidimensionalen Photonischen Kristallen, durch Multiphotonen-Laserschreiben, insbesondere Zwei-Photonen-Laserschreiben, oder durch Multiphotonen-Laserholographie, insbesondere Zwei-Photonen-Laserholographie, in einen anorganischen Photoresist, bevorzugt in einen irreversiblen Chalcogenid-Photoresist, und anschließendem Herausätzen der unbelichteten Strukturen.

Zur Durchführung des erfindungsgemäßen Verfahrens wird gemäß Verfahrensschritt a) zunächst ein anorganischer Photoresist bereitgestellt. Entscheidend bei der Auswahl des Materials ist dessen Eigenschaft, bei Belichtung mit Energien oberhalb der elektronischen Bandlücke eine Phasenänderung zu zeigen. Bevorzugt wird ein anorganisches Material eingesetzt, dessen Brechungsindex einen Wert von mindestens 1,4 besitzt.

Vorzugsweise wird ein Chalcogenid-Glas als anorganischer Photoresist verwendet. Ein Chalcogen ist ein chemisches Element aus der VI. Hauptgruppe des Periodensystems, wozu insbesondere Schwefel, Selen und Tellur zählen. Für das erfindungsgemäße Verfahren eigenen sich die folgenden Chalcogenide:
- Binäre Chalcogenide: Arsensulfid, -selenid und -tellurid, Silizium-, Zinn-, Antimon-, Phosphor-, Germanium-, Thallium- und Halogen-Chalcogenide.
- Tertiäre Chalcogenide: Phosphor-Arsen-, Silber-Arsen-, Phosphor-Antimon- und Phosphor-Zinn-Chalcogenide
- Multinäre Chalcogenode: Natrium-Germanium-Arsen-Selenid und Kupfer-Germanium-Silizium-Tellurid.
Besonders bevorzugt sind die beiden binären Chalcogenide Arsensulfid und Arsenselenid.

Anorganische Photoresists wie z. B. Chalcogenid-Gläser zeichnen sich dadurch aus, dass sich ihre Struktur unter Beleuchtung mit Licht geeigneter Wellenlänge (Energie) ändert. Demgemäß wird nach Verfahrensschritt b) der bereitgestellte Photoresist mit einem Laserstrahl, dessen Energie bei der gewählten Wellenlänge unterhalb der elektronischen Bandlücke des Photoresists liegt, bestrahlt. Die Intensität im Brennpunkt wird jedoch so hoch gewählt, dass über einen nichtlinearen Prozess (Mutti-Photonen-Prozess) dennoch eine lokale Phasenänderung im Photoresist auftritt. Die gleichzeitig bestehende Transparenz der Chalcogenid-Gläser für Frequenzen unterhalb der elektronischen Bandlücke sorgt dafür, dass das für Multi-Photonen-Prozesse benötigte Licht auch tatsächlich in das Innere des Materials eindringt, ohne durch Ein-Photonen-Prozesse absorbiert zu werden. Multi-Photonen-Prozesse lassen sich mit intensiven Laserpulsen oder alternativ mit einer kontinuierlich strahlenden Laserquelle hoher Intensität erzeugen.

Anstelle eines Laserstrahls ist hierfür prinzipiell jeder andere Energiestrahl geeignet, der strukturelle Veränderungen in Chalcogenid-Photoresists bewirkt. Da jedoch die meisten Photoresists, einschließlich Chalcogenid-Photoresists, in Bezug auf Elektronen- oder Ionenstrahlen nicht transparent sind, besteht hierfür lediglich eine begrenzte Eindringtiefe, wodurch sich keine dreidimensionalen Strukturen mit hohem Aspektverhältnis in das Material schreiben lassen. Daher eignen sich derartige Strahlen nur für das Schreiben zweidimensionaler Strukturen.

Gemäß Verfahrensschritt c) werden der Laserstrahl und der Photoresist bzw. das Substrat, auf dem sich der Photoresist befindet, solange gegeneinander bewegt, bis nach mehrfachem Wiederholen des Verfahrensschritts b) die gewünschte Struktur in das Material geschrieben ist.

Anschließend wird der belichtete Photoresist gemäß Verfahrensschritt d) in einer Ätzlösung entwickelt, die aufgrund der strukturellen und chemischen Unterschiede zwischen der belichteten und der unbelichteten Phase eine der beiden Phasen des Photoresists selektiv löst. Die Ätzlösung umfasst bevorzugt eine organische Lewis-Base, besonders bevorzugt Diethylamin, Isoamylamin, Benzylamin oder Propylamin. Der Chalcogenid-Photoresist verhält sich wie ein negativer Photoresist, da die belichteten Bereiche mit einer wesentlich geringeren Rate im Vergleich zu den unbelichteten Bereichen herausgelöst werden. Strukturell veränderte Chalcogenid-Photoresists z. B. aus Arsensulfid oder -selenid zeigen einen hohen Ätzkontrast, der bevorzugt oberhalb von 1:10, besonders bevorzugt oberhalb von 1:100, besonders bevorzugt oberhalb von 1:500 liegt, und besitzen einen hohen Brechungsindex, bevorzugt oberhalb von 2.

Schließlich wird gemäß Verfahrensschritt e) der entwickelte Photoresist als Photonischer Kristall entnommen, der ein photonisches Stop-Band oder eine vollständige photonische Bandlücke in seiner photonischen Zustandsdichte zeigt. Das erfindungsgemäße Verfahren erlaubt nicht nur die Herstellung von dreidimensionalen woodpile Strukturen, vielmehr lässt sich damit jede Struktur mit einer Längenskala im Bereich von Nanometern bis zu Mikrometern in einer, zwei oder drei Dimensionen herstellen, die miteinander verbundene Gitter von belichteten bzw. unbelichteten Bereichen einschließlich funktionaler Störstellen wie z. B. Punktdefekte, Linien oder Bänder aufweist.

Mit dem erfindungsgemäßen Verfahren hergestellte anorganische Photonische Kristalle eigenen sich für vollständige optische (all-optic) Anlagen, Schaltungen und Bauelemente für optische Telekommunikation oder optische Computersysteme.

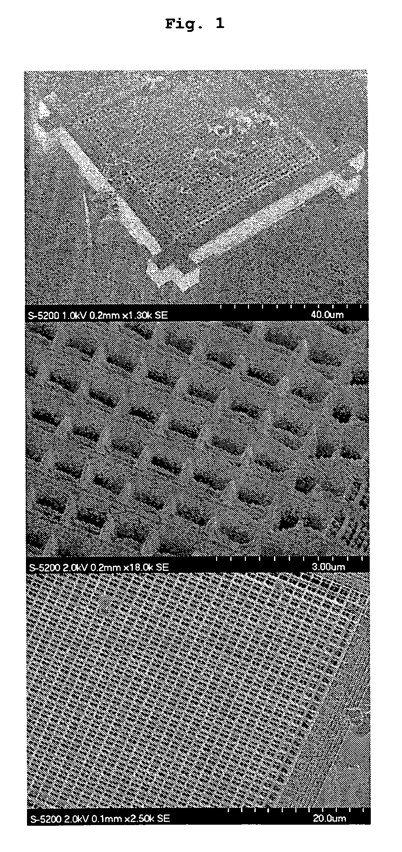

Die Erfindung wird im Folgenden anhand eines Ausführungsbeispiels und der Figur näher erläutert. Fig. 1 zeigt eine rasterelektronenmikroskopische Aufnahme einer geätzten 3D woodpile Struktur, die mittels direkten Laserschreiben in Arsensulfid As₂S₃ hergestellt wurde.

### 1. Bereitstellung eines Films aus einem Chalcogenid-Photoresist auf einem Substrat

Der erste Schritt bestand in der Aufbringung des Chalcogenids Arsensulfid As₂S₃ auf ein optisch transparentes Silikatglas mit den Maßen von 22 mm x 22 mm x 170 µm als Substrat. Festes Arsensulfid wurde zunächst in feines Pulver zerstoßen und anschließend in ein mit Aluminiumoxid beschichtetes Heizelement in eine thermische Verdampfungskammer eingebracht. Ein Substrathalter wurde eingesetzt, um das Glassubstrat am Platz zu halten. Nach Verschließen wurde die Kammer auf einen Druck von 3·10-⁵ Pa (2·10⁻⁷ Torr) evakuiert. Der Aluminiumoxid-Tiegel wurde auf 230-280°C aufgeheizt, wobei das pulverförmige Chalcogenid sublimierte und sich auf dem Glassubstrat in Form eines dünnen Films mit einer Dicke zwischen 5-20 µm niederschlug. Dieser Prozessschritt dauerte insgesamt 10-20 Minuten.

### 2. Direktes Laserschreiben einer dreidimensionalen Photonischen Kristallstruktur in den Chalcogenid-Photoresist

Der so hergestellte Chalocogenid-Photoresist wurde in einer Anordnung für Zwei-Photonen-Laserschreiben eingebracht. Um eine 3D Photonische Kristallstruktur in diesen Film zu schreiben, wurde ein regenerativ verstärkter Ti:Saphir-Laser mit einer Pulsdauer von 120 fs eingesetzt, dessen Wiederholrate zwischen 1 kHz und Einzelpuls eingestellt wurde. Als Wellenlänge wurde 800 nm gewählt, da in diesem Bereich die Ein-Photonen-Absorptionsrate des Chalcogenids vernachlässigbar ist.

Der Laserstrahl wurde durch eine Kombination aus Halbwellenplatte und Polarisator abgeschwächt, so dass einige Zehntel nJ an Einzelpulsenergie in ein umgekehrtes Mikroskop eingekoppelt wurden. Dort wurden die fs-Pulse über ein 100-faches Ölimmersionsobjektiv mit hoher numerischer Apertur (NA = 1,4) in den Chalcogenid-Photoresist fokussiert. Die Probe befand sich auf einem kapazitiv kontrollierten Piezoscanner, der eine Auflösung unterhalb von 5 nm bei einem Operationsbereich von 200 µm x 200 µm x 20 µm besaß. Ein Rechner regelte das Scannen und synchronisierte diese Bewegung mit dem Ausgang des Lasersystems.

Die so erzielte hohe Intensität im Brennpunkt ermöglichte einen Zwei-Photonen-Absorptionsprozess. Die Form des belichteten Volumens war ein Ellipsoid mit einem Verhältnis des axialen zum lateralen Durchmesser von ca. 6. Mit diesem Aufbau waren bisher laterale Dimensionen bis hinunter zu 200 nm zugänglich. Das Volumen im Brennpunkt des Lasers wurde konstant gehalten, während das Substrat, auf dem sich der Photoresist befand, entlang der x-, y- bzw. z-Achse bewegt wurde. Bereits jetzt war die mit dem Laser geschriebene Struktur im Chalcogenid-Photoresist erkennbar.

### 3. Ätzen des beschriebenen Chalcogenid-Photoresists

Der so beschriebene Photoresist wurde nun einem flüssigen Ätzmittel, d.h. einem organisches Lösungsmittel, das eine reaktive organische Lewis-Base, insbesondere ein organisches Amin wie z. B. Diethylamin umfasste, ausgesetzt. Aufgrund der chemischen Sensitivität des Ätzmittels wurden wie in einem negativen Photoresist die belichteten Bereiche im Vergleich zu den unbelichteten Bereichen des Chalcogenid-Photoresists sehr viel langsamer geätzt. Das Ätzen dauerte ca. 10-20 Minuten. Das Verhältnis der Ätzraten zwischen belichteten und unbelichteten Bereichen war größer oder gleich 500:1. Anschließend wurde der photonische Kristall aus dem Ätzmittel entnommen, in einem organischen Lösungsmittel wie z. B. 1,2-Dichloromethan gereinigt und unter Normalbedingungen getrocknet. Fig. 1 zeigt eine rasterelektronenmikroskopische Aufnahme einer geätzten dreidimensionalen photonischen woodpile Kristallstruktur, die mittels direktem Laserschreiben in Arsensulfid As₂S₃ erhalten wurde.

## Patentansprüche

1. Verfahren zur Herstellung von dreidimensionalen Photonischen Kristallen mit den Verfahrensschritten
a) Bereitstellen eines anorganischen Photoresists, der bei Belichtung mit einer Energie, die größer als die elektronische Bandlücke des Photoresists ist, eine Phasenänderung zeigt,
b) Belichten des Photoresists mit einem Laserstrahl, dessen Energie geringer ist als die elektronische Bandlücke des Photoresists, dessen Intensität im Brennpunkt aber so hoch ist, dass dort nichtlineare Effekte auftreten, wodurch im Photoresist eine Phasenänderung auftritt,
c) mehrfaches Bewegen des Laserstrahls und des Photoresists relativ zueinander und Wiederholen des Verfahrensschritts b),
d) Entwickeln des belichteten Photoresists in einer Ätzlösung, die bevorzugt eine Phase des Photoresists löst,
e) Entnehmen des entwickelten Photoresists als dreidimensionaler Photonischer Kristall, wobei
die in b) genannten nichtlinearen Effekte Multi-Photonen-Prozesse sind, und wobei
die Ätzlösung eine organische Lewis-Base umfasst.

2. Verfahren nach Anspruch 1 mit einem Photoresist, der einen Brechungsindex von mindestens 1,4 aufweist.

3. Verfahren nach Anspruch 1 oder 2 mit einem Photoresist, der aus einer binären, ternären oder multinären Verbindung besteht, die ein Element der VI. Hauptgruppe des Periodensystems umfasst.

4. Verfahren nach Anspruch 3 mit einem Photoresist, bestehend aus einer Verbindung aus Schwefel, Selen oder Tellur mit Arsen, Phosphor, Antimon, Silizium, Germanium oder Zinn.

5. Verfahren nach Anspruch 4 mit einem Photoresist aus Arsensulfid oder Arsenselenid.

6. Verfahren nach einem der Ansprüche 1 bis 5 mit einer Wellenlänge der Laserstrahlung zwischen 450 nm und 5000 nm.

7. Verfahren nach einem der Ansprüche 1 bis 6, wobei das Verhältnis der Reaktionsrate der Ätzlösung in den belichteten Bereichen zur Reaktionsrate der Ätzlösung in den unbelichteten Bereichen mindestens 1:10 beträgt.

8. Verfahren nach Anspruch 7, wobei das Verhältnis der Reaktionsrate der Ätzlösung in den belichteten Bereichen zu der Reaktionsrate der Ätzlösung in den unbelichteten Bereichen mindestens 1:100 beträgt.

9. Verfahren nach einem der Ansprüche 1 bis 8 mit einer Ätzlösung, die Diethylamin, Isoamylamin, Benzylamin oder Propylamin umfasst.

## Claims

1. Process for producing three-dimensional photonic crystals, comprising the process steps of
a) providing an inorganic photoresist which, on illumination with energy which is greater than the electronic band gap of the photoresist, exhibits a phase alteration,
b) illuminating the photoresist with a laser beam whose energy is lower than the electronic band gap of the photoresist, but whose intensity at the focal point is so high that nonlinear effects occur there, as a result of which a phase alteration occurs in the photoresist,
c) repeatedly moving the laser beam and the photoresist relative to one another and repeating process step b),
d) developing the illuminated photoresist in an etching solution which preferably dissolves one phase of the photoresist,
e) removing the developed photoresist as a three-dimensional photonic crystal, wherein the nonlinear effects mentioned in b) are multiphoton processes, and wherein the etching solution comprises an organic Lewis base.

2. Process according to Claim 1, comprising a photoresist which has a refractive index of at least 1.4.

3. Process according to Claim 1 or 2, comprising a photoresist which consists of a binary, ternary or multinary compound which comprises an element of main group VI of the periodic table.

4. Process according to Claim 3, comprising a photoresist consisting of a compound of sulfur, selenium or tellurium with arsenic, phosphorus, antimony, silicon, germanium or tin.

5. Process according to Claim 4, comprising a photoresist composed of arsenic sulfide or arsenic selenide.

6. Process according to one of Claims 1 to 5, having a wavelength of the laser radiation between 450 nm and 5000 nm.

7. Process according to one of Claims 1 to 6, wherein the ratio of the reaction rate of the etching solution in the illuminated regions to the reaction rate of the etching solution in the unilluminated regions is at least 1:10.

8. Process according to Claim 7, wherein the ratio of the reaction rate of the etching solution in the illuminated regions to the reaction rate of the etching solution in the unilluminated regions is at least 1:100.

9. Process according to one of Claims 1 to 8, comprising an etching solution which comprises diethylamine, isoamylamine, benzylamine or propylamine.

## Revendications

1. Procédé de fabrication de cristaux photoniques tridimensionnels, le procédé présentant les étapes qui consistent à :
a) préparer un photomasque anorganique qui subit un changement de phase lorsqu'il est éclairé à une énergie supérieure à l'écart énergétique des électrons du photomasque,
b) exposer le photorésist à un faisceau laser dont l'énergie est inférieure à l'écart énergétique des électrons du photomasque mais dont l'intensité au point focal est suffisamment élevée pour que des effets non linéaires y surviennent et entraînent un changement de phase du photomasque,
c) déplacer plusieurs fois le faisceau laser et le photomasque l'un par rapport à l'autre et répéter l'étape de traitement b),
d) développer le photomasque éclairé dans une solution de gravure qui dissout de préférence une phase du photomasque,
e) prélever le photomasque développé comme cristal photonique tridimensionnel,
les effets non linéaires cités en b) étant des processus à plusieurs photons et
la solution de gravure contenant une base organique de Lewis.

2. Procédé selon la revendication 1 avec un photomasque dont l'indice de réfraction est d'au moins 1,4.

3. Procédé selon les revendications 1 ou 2 avec un photomasque constitué d'un composé binaire, ternaire ou multiple qui comprend un élément du groupe principal VI du système périodique.

4. Procédé selon la revendication 3 avec un photomasque constitué d'un composé de soufre, de sélénium ou de tellure avec l'arsenic, le phosphore, l'antimoine, le silicium, le germanium ou l'étain.

5. Procédé selon la revendication 4 avec un photomasque constitué de sulfure d'arsenic ou de séléniure d'arsenic.

6. Procédé selon l'une des revendications 1 à 5, dans lequel la longueur d'onde du faisceau laser est comprise entre 450 nm et 5 000 nm.

7. Procédé selon l'une des revendications 1 à 6, dans lequel le rapport entre la vitesse de réaction de la solution de gravure dans les parties éclairées et la vitesse de réaction de la solution de gravure dans les parties non éclairées est d'au moins 1:10.

8. Procédé selon la revendication 7, dans lequel le rapport entre la vitesse de réaction de la solution de gravure dans les parties éclairées et la vitesse de réaction de la solution de gravure dans les parties non éclairées est d'au moins 1:100.

9. Procédé selon l'une des revendications 1 à 8, conduit avec une solution de gravure qui contient de la diéthylamine, de l'isoamylamine, de la benzylamine ou de la propylamine.
